# EUROPEAN PATENT APPLICATION

(11) **EP 2 450 793 A1**
(43) Date of publication of application: **09.05.2012**
(21) Application number: 11008795.4
(22) Date of filing: 04.11.2011
(51) Int. Cl.: G06F 9/46, G06F 9/48

(54) **Method of defining state transitions in a software and application control management object**

(30) Priority: 04.11.2010 US 409982 P
(71) Applicant: HTC Corporation, Taoyuan County 330 (TW)
(72) Inventor: Yu, Chun-Ta, Taoyuan City Taoyuan County 330 (TW); Tseng, Yin-Yeh, Taoyuan City Taoyuan County 330 (TW)
(74) Representative: Emde, Eric

(57) **Abstract**

A method of defining state transition in SACMO in a service system is disclosed. The SACMO comprises an inactive state, an active state, a rollback state and a suspend state. The method comprises executing a SACMO operation; and transferring states of the SACMO according the at least one SACMO operation or completion of a transaction or a rollback process.

## Description

### Cross Reference To Related Applications

This application claims the benefit of U.S. Provisional Application No. 61/409,982, filed on Nov. 04, 2010 and entitled "State Transition in SACMO", the contents of which are incorporated herein in their entirety.

### Background of the Invention

### 1. Field of the Invention

The present invention relates to a method used in a service system, and more particularly, to a method of defining state transition in software and application control management object for a service system.

### 2. Description of the Prior Art

Open Mobile Alliance (OMA) is founded to develop OMA specifications for mobile services to meet users' needs. Furthermore, the OMA specifications aim to provide the mobile services which are interoperable across geographic areas (e.g. countries), operators, service providers, networks, operation systems and mobile devices. In detail, the mobile services conforming to the OMA specifications can be used by the users without restriction to particular operators and service providers. The mobile services conforming to the OMA specifications are also bearer agnostic, i.e., the bearer that carries the mobile services can be a second generation (2G) mobile system such as GSM, EDGE or GPRS, or a third generation (3G) and beyond mobile system such as UMTS, LTE or LTE-Advanced. Further, the mobile services can be executed on an operation system such as Windows, Android or Linux operated on various mobile devices. Therefore, industries providing devices or the mobile services supporting the OMA specifications can benefit from a largely growing market enabled by interoperability of the mobile services. Besides, the users use the devices or the mobile services supporting the OMA specifications can also have a better experience due to the interoperability of the mobile services.

A device management (DM) protocol conforming to the OMA specifications is designed for management of mobile devices such as mobile phones, PDAs and palm top computers. The device management is intended to support the following typical uses: configuration of device for allowing changes to settings and parameters of the device, software upgrades for providing new software (e.g. applications and system software) and/or bug fixes to be loaded on the device, and fault management for reporting errors from the device, and/or querying about status of the device. In addition, the DM protocol defines a way according to which a DM client (e.g. mobile device) communicates with a DM server (e.g. network), and thereby the DM client can feedback a command, a status or a report to the DM server. Further, the DM server manages the DM client through a set of management objects in the DM client. The management object is conformed to a Software and Application Control Management Object (SACMO) specification, which aims to enable remote operations for software and application control in the device. SACMO specifications will provide capabilities of processing management actions such as workflow, processing or on device management of software and applications utilizing existing management objects. The SACMO architecture has to support DM operations to be applied according to workflow scripts in the device, whereby any combination of operations on existing Management Objects can be applied and conditionally executed, with just the combined result being reported back to the DM server.

The goal of SACMO is to enable DM operations to be applied according to workflow scripts in the device, whereby any combination of operations on existing Management Objects can be applied and conditionally executed, with just the combined result being reported back to the DM server. This avoids a series of individual client-server interactions, thereby optimizing the network traffic and reducing the workflow execution time.

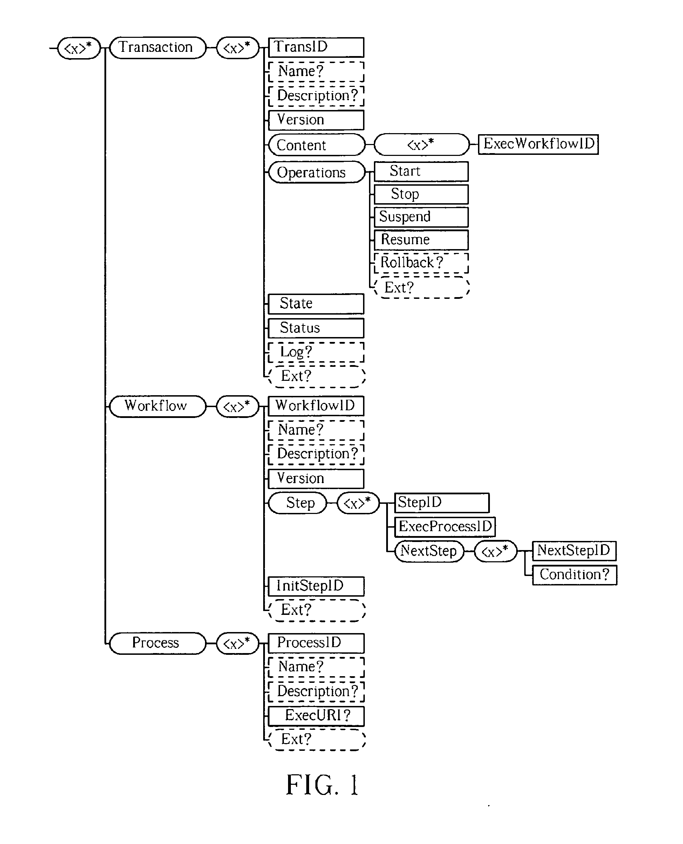

Please refer to FIG. 1, which is a schematic diagram of a SACMO Management Object tree in the prior art. The state node in Management Object tree of SACMO is a leaf node to specify the state of a transaction. The SACMO management object tree is used for setting up parameters and operational functionality necessary for managing a workflow object. A workflow is a sequence of steps which is conditionally executed. Each step can be an operation, process, command or other type of resource. Between steps, a condition is used to determinate the next step. A Process is a basic unit for a specific operation execution. A Process consists of an URI path which indicates the node of target MO to execute. The Process is indicated by a unique Process ID and it can be reused in Workflows. A Step is a basic unit of a Workflow which consists of a Process and information for the next Step(s). A Step MUST have a Process ID to indicate the Process to execute. If a Step is followed by another step, a next step subtree is created. The next step subtree may contain multiple next Steps. Each next Step has a NextStepID to indicate the following Step and optionally a condition. The SACMO Client checks the condition, if the condition is passed, and then the next step will be executed. A transaction is an instance of a Workflow execution. SACMO Server MAY retrieve result of the Transaction execution from status node under the Transaction tree.

In current design in SACMO, there are four SACMO transaction states which are Inactive, Active, Suspend, and Rollback defined in SACMO specification. However there is no description regarding the state transition. Here we proposed the detailed state transition information.

### Summary of the Invention

The disclosure therefore provides a method of defining state transition in software and application control management object (SACMO).

A method of defining state transition in SACMO in a service system is disclosed. The SACMO comprises an inactive state, an active state, a rollback state and a suspend state. The method comprises executing a SACMO operation; and transferring states of the SACMO according the at least one SACMO operation or completion of a transaction or a rollback process.

These and other objectives of the present invention will no doubt become obvious to those of ordinary skill in the art after reading the following detailed description of the preferred embodiment that is illustrated in the various figures and drawings.

### Brief Description of the Drawings

FIG.1 is a schematic diagram of a SACMO Management Object tree in the prior art.

FIG.2 is a schematic diagram of an exemplary service system.

FIG.3 is a schematic diagram of an exemplary communication device.

FIGs.4A and 4B are flowchart of an exemplary process.

FIG.5 is an illustration according to the process shown in FIGs. 4A and 4B.

### Detailed Description

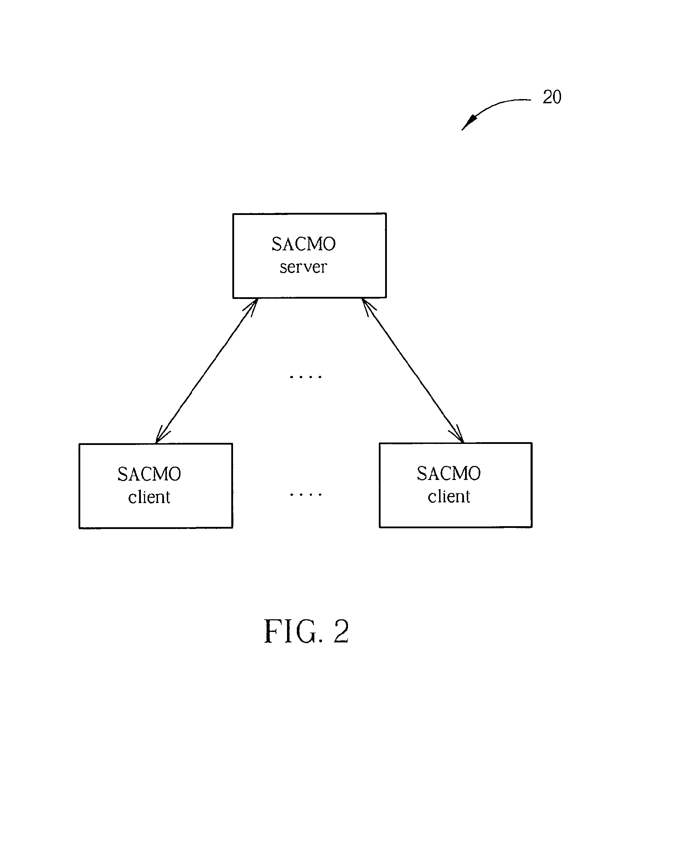

Please refer to FIG.2, which is a schematic diagram of a service system 20 according to an example of the present disclosure. The service system 20 complies with an Open Mobile Alliance (OMA) Device Management (DM) protocol and is briefly composed of a Software and Application Control Management Object (SACMO) server, and a SACMO client. The SACMO server is a logical entity which is dedicated to issue SACMO operations to the device or consumes the SACMO alerts from the device. The SACMO client is responsible for executing SACMO operations.

A SACMO management object (MO) tree is defined and used for setting up parameters and operational functions necessary for executing a workflow without indications from the SACMO server. The SACMO server sends the management object tree to the SACMO client for setting up a workflow. Then, the SACMO client executes the workflow according to the management object tree until the workflow is completed or an error occurs.

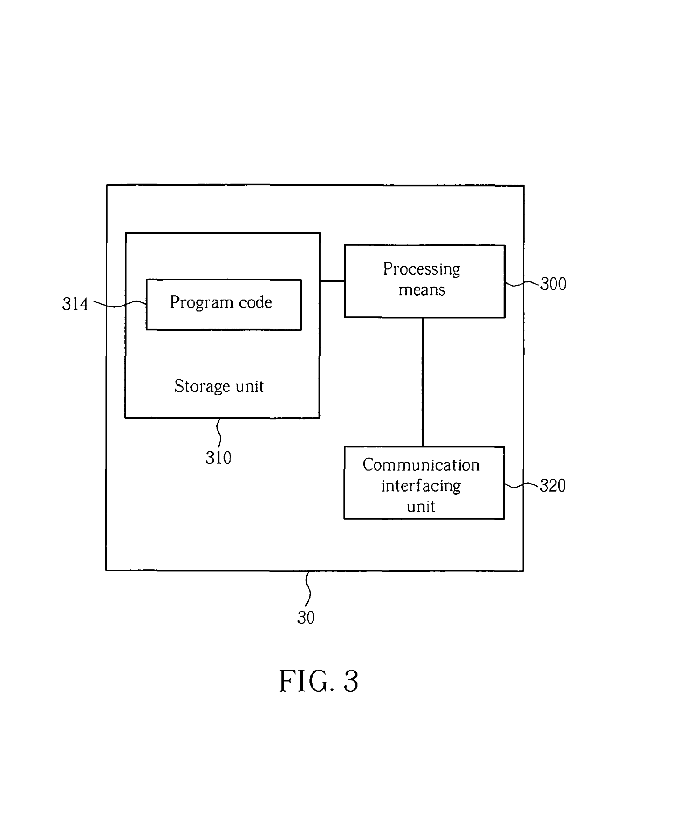

Please refer to FIG.3, which is a schematic diagram of a communication device 30 according to an example of the present disclosure. The communication device 30 can be the SACMO server or the SACMO client shown in FIG.2, but is not limited herein. The communication device 30 may include a processor 300 such as a microprocessor or Application Specific Integrated Circuit (ASIC), a storage unit 310 and a communication interfacing unit 320. The storage unit 310 may be any data storage device that can store a program code 314, accessed by the processor 300. Examples of the storage unit 310 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 320 is preferably a transceiver and can exchange signals with the server according to processing results of the processor 300.

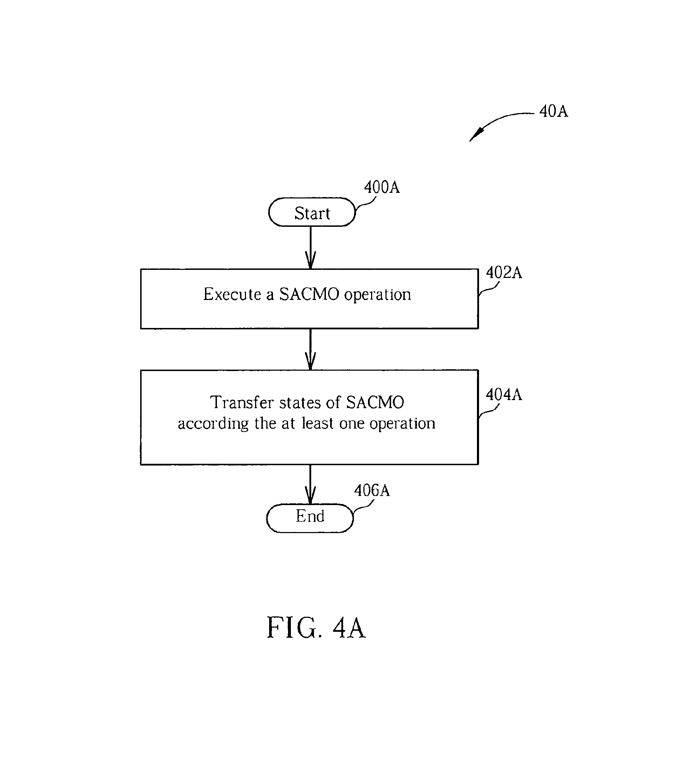

Please refer to FIGs. 4A, which is a flowchart of a process 40A according to an example of the present disclosure. The process 40A is defining state transition in SACMO for the service system 20 shown in FIG. 2. A transaction of SACMO has one of the four states: an inactive state, an active state, a suspend state and a rollback state. The process 40A may be compiled into the program code 314 and includes the following steps:

Step 400A: Start.

Step 402A: Execute a SACMO operation.

Step 404A: Transfer states of SACMO according to the at least one operation.

Step 406A: End.

According to the process 40A, the SACMO client executes at least one SACMO operation, such as a start operation, a stop operation, a suspend operation, a resume operation, and a rollback operation. The transaction transfers states according the at least one operation. In other words, the state transition of SACMO is triggered by one of the SACMO operations (e.g. start, stop, suspend, resume, and rollback). The SACMO operations can be set in an operation sub-tree under SACMO MO tree of the device.

In some examples, the state transaction can be triggered by at least one of the following scenarios. The start operation triggers transition from the inactive state to the active state. The stop operation triggers transition from the active state to the inactive state. The stop operation triggers transition from the suspend state to the inactive state. The suspend operation triggers transition from the active state to the suspend state. The resume operation triggers transition from the suspend state to the active state. The rollback operation triggers transition from the inactive state to the rollback state.

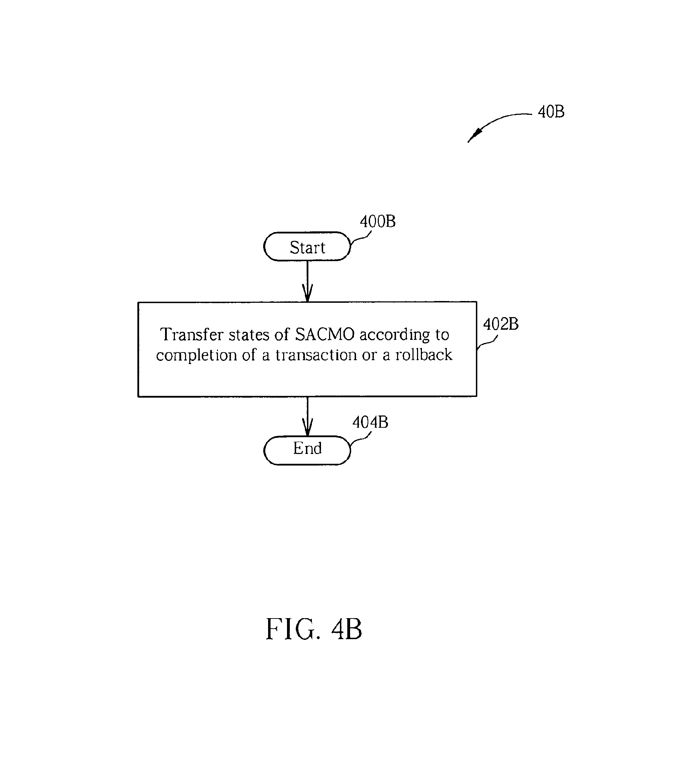

Please refer to FIGs.4B, which is a flowchart of a process 40B according to another example of the present disclosure. The process 40B is defining state transition in SACMO for the service system 20 shown in FIG. 2. A transaction of SACMO has one of the four states: an inactive state, an active state, a suspend state and a rollback state. The process 40B may be compiled into the program code 314 and includes the following steps:

Step 400B: Start.

Step 402B: Transfer states of SACMO according to completion of a transaction or a rollback.

Step 404B: End.

According to the process 40B, the transaction transfers states according completion of a transaction or a rollback. In other words, the state transition of SACMO is triggered when the set of the process is complete. The SACMO operations can be set in an operation sub-tree under SACMO MO tree of the device. The set of the process can be a transaction or a roll back.

For example, a transition from the rollback state to the inactive state is triggered when the rollback is finished. A transition from the active state to the inactive state is triggered when the transaction is finished.

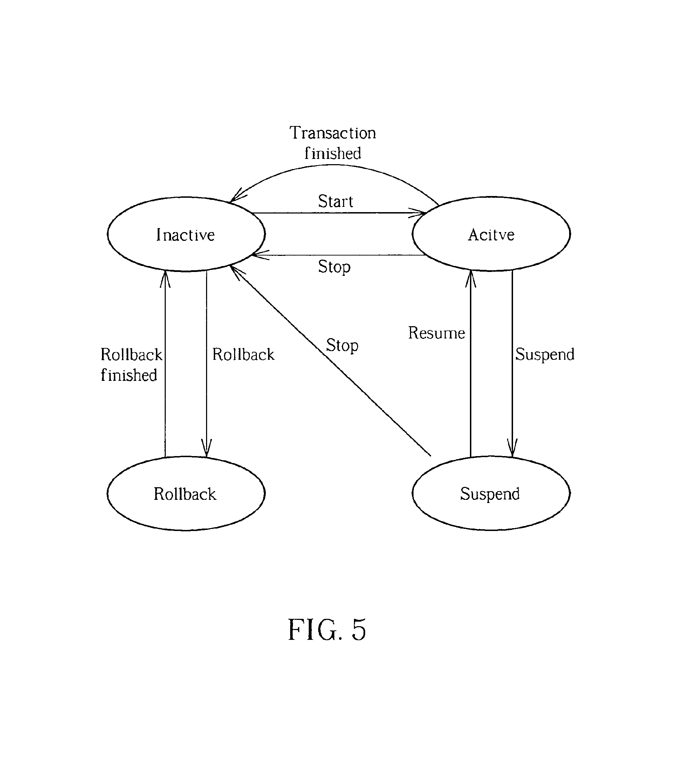

Please refer to FIG.5, which is an illustration according to the process 40. As shown in FIG.5, when a transaction is in the inactive state, the transaction transfers to the active state after executing the start operation or transfers to the rollback state after executing the rollback operation. When the transaction is in the active state, the transaction transfers to the inactive state after executing the stop operation or transfers to the suspend state after executing the suspend operation. When the transaction is in the suspend state, the transaction transfer to the active state after executing the resume operation or transfers to the inactive state after executing the stop operation. When the transaction is in the rollback state and the rollback is finished, the transaction transfers back to the inactive state. When the transaction is finished, the transaction transfers back the inactive state. Therefore, the state transition triggered by operations is well defined according to the example of the present disclosure.

Please note that, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 30.

To sum up, according to the example of the present disclosure, the state transition is well defined. The state transition is triggered according the SACMO operations or completion of the transaction or the rollback. The start operation triggers transition from the inactive state to the active state. The stop operation triggers transition from the active state to the inactive state. The stop operation triggers transition from the suspend state to the inactive state. The suspend operation triggers transition from the active state to the suspend state. The resume operation triggers transition from the suspend state to the active state. The rollback operation triggers transition from the inactive state to the rollback state. A transition from the rollback state to the inactive state is triggered when the rollback is finished. A transition from the active state to the inactive state is triggered when the transaction is finished.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of defining state transition in software and application control management object (SACMO) in a service system, the SACMO comprising an inactive state, an active state, a rollback state and a suspend state, the method comprising:
executing a SACMO operation; and
transferring states of the SACMO according to the at least one SACMO operation.

2. The method of claim 1, wherein the at least one SACMO operation comprises a start operation, a stop operation, a suspend operation, a resume operation, and a rollback operation.

3. The method of claim 2, wherein transferring the different states of the SACMO according to the at least one operation comprises transferring to the active station after executing the start operation in the inactive state.

4. The method of claim 2, wherein transferring the different states of the SACMO according to the at least one operation comprises transferring to the inactive state after executing the stop operation in the active state.

5. The method of claim 2, wherein transferring the different states of the SACMO according to the at least one operation comprises transferring to the inactive state after executing the stop operation in the suspend state.

6. The method of claim 2, wherein transferring the different states of the SACMO according to the at least one operation comprises transferring to the suspend state after executing the suspend operation in the active state.

7. The method of claim 2, wherein transferring the different states of the SACMO according to the at least one operation comprises transferring to the active state after executing the resume operation in the suspend state.

8. The method of claim 2, wherein transferring the different states of the SACMO according to the at least one operation comprises transferring to the rollback state after executing the rollback operation in the inactive state.

9. The method of claim 1, wherein the service system complies with an Open Mobile Alliance (OMA) Device Management (DM) protocol.

10. A method of defining state transition in software and application control management object (SACMO) in a service system, the SACMO comprising an inactive state, an active state, a rollback state and a suspend state, the method comprising:
transferring states of the SACMO according to completion of a transaction or a rollback process.

11. The method of claim 10, wherein transferring the different states of the SACMO according to the completion of the transaction or the rollback process comprises transferring to the inactive state when the transaction or the roll back process is finished.

12. The method of claim 10, wherein the service system complies with an Open Mobile Alliance (OMA) Device Management (DM) protocol.
